# EUROPÄISCHE PATENTANMELDUNG

(11) **EP 4 507 145 A1**
(43) Veröffentlichungstag der Anmeldung: **12.02.2025**
(21) Anmeldenummer: 24306338.5
(22) Anmeldetag: 08.08.2024
(51) Int. Cl.: H02G 3/12, H02G 3/08

(54) **EINBAUDOSE**

(30) Priorität: 09.08.2023 DE 102023121250
(71) Anmelder: SCHNEIDER ELECTRIC INDUSTRIES SAS, 92500 Rueil-Malmaison (FR)
(72) Erfinder: Rao, Arjun, 51643 Gummersbach (DE)
(74) Vertreter: Manitz Finsterwald Patent- und Rechtsanwaltspartnerschaft mbB

(57) **Zusammenfassung**

Eine Einbaudose für elektrische Installationsgeräte weist abgeflachte Wandteile auf, die mit einer Aussparung versehen sind, in die ein Einsatz eingesetzt ist.

## Beschreibung

Die vorliegende Erfindung betrifft eine Einbaudose für elektrische Installationsgeräte, die eine offene Vorderseite, eine Rückwand und eine gekrümmte Umfangswand mit zwei abgeflachten Wandteilen aufweist, die einander parallel gegenüberliegen.

Derartige Einbaudosen sind aus dem Stand der Technik in verschiedenen Ausführungen bekannt und können als Hohlwanddosen, aber auch zum Einbau in Ziegel- oder Betonwände oder andersartige Gebäudeteile verwendet werden. Ebenfalls bekannt sind anreihbare Einbaudosen, die miteinander verbindbar sind, um mehrere nebeneinanderliegende Installationsgeräte, beispielsweise Steckdosen oder Schalter, installieren zu können. Problematisch ist hierbei einerseits, dass eine möglichst stabile Verbindung zwischen zwei benachbarten Einbaudosen wünschenswert ist. Andererseits kann es abhängig von den Abmessungen und dem Rastermaß der Einbaudosen problematisch sein, mehrere Einbaudosen nebeneinander so anzuordnen, dass ein vorgeschriebener Abstand zwischen zwei benachbarten Einbaudosen eingehalten wird, insbesondere wenn dieser Abstand geringer als ein Einbaumaß, beispielsweise als der Durchmesser, der Einbaudose ist.

Es ist deshalb die Aufgabe der vorliegenden Erfindung, eine Einbaudose für elektrische Installationsgeräte zu schaffen, die stabil anreihbar ist, wobei der Abstand zwischen zwei angereihten Einbaudosen minimiert ist.

Die Lösung dieser Aufgabe erfolgt durch die Merkmale des Anspruchs 1 und bei einer Einbaudose der eingangs genannten Art dadurch, dass an nur einem der beiden abgeflachten Wandteile eine zur Vorderseite hin offene Aussparung vorgesehen ist, in die von der Vorderseite aus ein das eine Wandteil und die Aussparung komplementär ergänzender Einsatz eingesetzt ist.

Bei der erfindungsgemäßen Einbaudose ist somit nicht an beiden abgeflachten Wandteilen, sondern nur an einem der beiden abgeflachten Wandteile eine sich zur Vorderseite öffnende Aussparung vorgesehen, die mit Hilfe des Einsatzes verschlossen werden kann. Dies eröffnet die Möglichkeit, eine zweite Einbaudose mit einem sehr geringen Abstand in die Aussparung der ersten Einbaudose einzusetzen, nachdem der Einsatz aus der Aussparung entfernt worden ist. Somit kann die erfindungsgemäße Einbaudose mit eingesetztem Einsatz als Einzeldose verwendet werden. Gleichzeitig können jedoch mehrere Einbaudosen aneinander angereiht werden, um eine Zweifach-, Dreifach- oder Vielfachanordnung herzustellen. Da der Einsatz sowohl die Aussparung wie auch das Wandteil komplementär ergänzt, wenn dieser in die Aussparung eingesetzt ist, ist bei eingesetztem Einsatz eine Einbaudose geschaffen, die sich in ihrem äußeren Erscheinungsbild und im Hinblick auf Stabilität nicht von einer einstückigen Einbaudose unterscheidet. Nach Entfernen des Einsatzes und Einsetzen einer zweiten Einbaudose in die Aussparung ist wiederum eine kompakte und stabile Einheit geschaffen, wobei der Abstand zwischen den beiden benachbarten Einbaudosen geringer als die Höhe oder der Durchmesser einer Einbaudose sein kann.

Vorteilhafte Ausführungsformen sind in der Beschreibung, der Zeichnung sowie den Unteransprüchen beschrieben.

Nach einer ersten vorteilhaften Ausführungsform können an dem einen Wandteil und an dem Einsatz zueinander komplementäre Führungselemente vorgesehen, wobei an dem anderen Wandteil Führungselemente vorgesehen sein können, die zu den Führungselementen des einen Wandteils komplementär sind. Bei dieser Ausführungsform ist sichergestellt, dass der Einsatz aufgrund der zueinander komplementären Führungselemente von Einsatz und Wandteil stabil in die Aussparung eingesetzt und in dieser gehalten werden kann. Gleichzeitig kann eine weitere Einbaudose der gleichen Bauart mit ihren Führungselementen des anderen Wandteils in die Aussparung der einen Einbaudose eingesetzt werden.

Nach einer weiteren vorteilhaften Ausführungsform kann der Einsatz in der Aussparung lösbar verriegelbar sein. Hierdurch ist gewährleistet, dass sich der Einsatz nicht versehentlich von der Einbaudose löst, andererseits aber bei Bedarf entfernt werden kann. Hierbei kann der Einsatz mit einem Clip versehen sein, der ein Betätigungselement aufweist, beispielsweise ein Vorsprung oder einen Haken. Ein solches Betätigungselement kann von einem Finger hintergriffen werden, um den Clip aus einer Verriegelungsstellung zu lösen und gleichzeitig den Einsatz aus der Aussparung zu entfernen.

Nach einer weiteren vorteilhaften Ausführungsform kann der Einsatz einen Schraubenkanal aufweisen, um eine Befestigungsschraube aufzunehmen, was ebenfalls zu einem kompletten Anreihmaß beiträgt.

Nach einer weiteren vorteilhaften Ausführungsform können an nur einem der beiden abgeflachten Wandteile mehrere zur Vorderseite hin offene Aussparungen vorgesehen sein, in die von der Vorderseite aus jeweils ein das eine Wandteil und die Aussparung komplementär ergänzender Einsatz eingesetzt ist. Bei dieser Ausführungsform einer Einbaudose können mehrere Installationsgeräte nebeneinander in einer Einbaudose installiert werden. Gleichzeitig besteht nach wie vor die Möglichkeit, mehrere derartige Einbaudosen nebeneinander anzureihen, indem die Einsätze einer Einbaudose entfernt werden und in die dadurch geschaffenen Aussparungen eine weitere Einbaudose der gleichen Bauart eingesetzt wird.

Nach einer weiteren vorteilhaften Ausführungsform kann der Einsatz einen im Wesentlichen quaderförmigen Hauptkörper aufweisen, an dessen vorderer Stirnseite ein sich quer zum Hauptkörper erstreckender Quersteg angeformt ist, der insbesondere über den Hauptkörper an zwei Seiten seitlich vorsteht. Bei dieser Ausführungsform kann der Einsatz besonders stabil in der Aussparung verankert werden. Gleichzeitig ist durch den sich seitlich über den Hauptkörper hinaus erstreckenden Quersteg dafür gesorgt, dass im Bereich der Aussparung eine stabile Auflagefläche für ein Installationsgerät geschaffen ist.

Nach einer weiteren vorteilhaften Ausführungsform kann die gekrümmte Umfangswand zwei weitere abgeflachte Wandteile aufweisen, die einander parallel gegenüberliegen, wobei in einem dieser Wandteile eine zur Vorderseite hin offene Aussparung vorgesehen ist, in die von der Vorderseite aus ein dieses Wandteil und die Aussparung komplementär ergänzender Einsatz eingesetzt ist. Mit dieser Ausführungsform können mehrere gleichartige Einbaudosen nicht nur nebeneinander sondern auch übereinander angereiht werden, wodurch die Einbaudose äußerst flexibel verwendet werden kann.

Nach einem weiteren Aspekt der vorliegenden Erfindung betrifft diese eine Kombination von zumindest zwei Einbaudosen gleicher Bauart der vorstehend beschriebenen Art, wobei an dem einen Wandteil einer Einbaudose und an dem anderen Wandteil der anderen Einbaudose miteinander zusammenwirkende Rastmittel vorgesehen sind. Wenn bei dieser Ausführungsform der Einsatz aus einer Einbaudose entfernt worden ist, kann die andere Einbaudose mit ihrem anderen Wandteil in die Aussparung der einen Einbaudose eingesetzt werden, wobei die an den beiden Einbaudosen vorgesehenen Rastmittel im eingesetzten Zustand dafür sorgen können, dass die beiden Einbaudosen miteinander verriegelt sind. Hierbei kann es vorteilhaft sein, wenn die Rastmittel lösbar sind und insbesondere manuell ohne Werkzeug lösbar sind, so dass die Verbindung zwischen den beiden Einbaudosen auch wieder gelöst werden kann, sofern dies erforderlich sein sollte.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine perspektivische Ansicht einer Einbaudose;
- Fig. 2: eine perspektivische Ansicht der Einbaudose von Fig. 1 mit entferntem Einsatz;
- Fig. 3 und 4: eine perspektivische Ansicht der Einbaudose von Fig. 1 und Fig. 2;
- Fig. 5: eine perspektivische Ansicht zweier Einbaudosen vor dem Aneinanderreihen;
- Fig. 6: eine perspektivische Ansicht der Einbaudosen von Fig. 5 in miteinander gekoppeltem Zustand;
- Fig. 7: eine perspektivische Rückansicht von Fig. 5;
- Fig. 8: eine perspektivische Rückansicht von Fig. 6;
- Fig. 9: eine Einbaudose einer weiteren Ausführungsform; und
- Fig. 10: eine Einbaudose einer weiteren Ausführungsform.

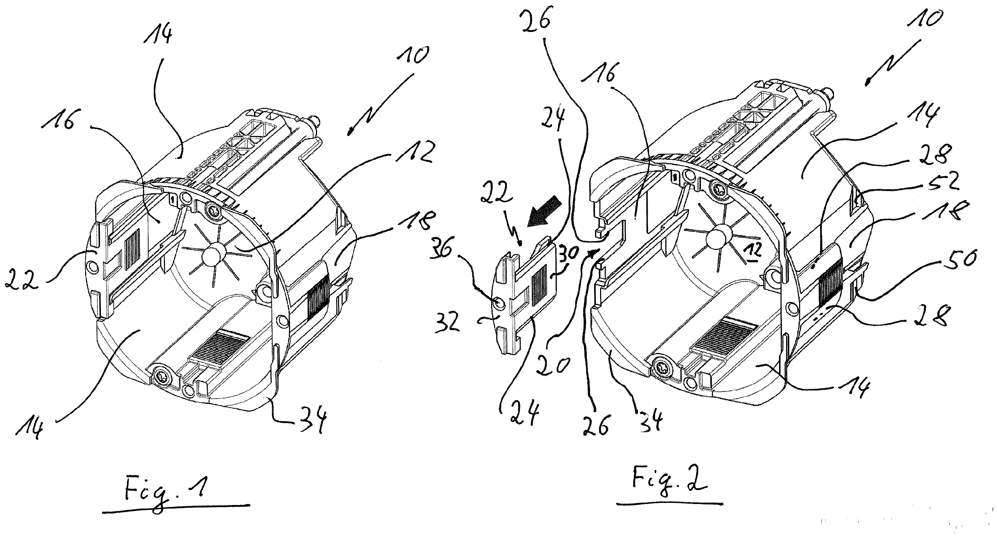

Die in den Fig. 1 bis Fig. 8 dargestellte Einbaudose 10 für elektrische Installationsgeräte ist aus Kunststoff hergestellt und weist eine Rückwand 12, eine gekrümmte Umfangswand 14 und zwei abgeflachte Wandteile 16 und 18 auf, die einander parallel gegenüberliegen. Hierdurch ist die Einbaudose 10 an ihrer Vorderseite offen und von der offenen Vorderseite aus kann ein Installationsgerät in die Einbaudose eingesetzt werden.

Wie insbesondere Fig. 2 verdeutlicht, ist nur an einem der beiden abgeflachten Wandteile 16 und 18, nämlich dem in Fig. 2 links dargestellten Wandteil 16 eine zur Vorderseite hin offene Aussparung 20 vorgesehen, in die von der Vorderseite aus ein Einsatz 22 eingesetzt werden kann (vgl. Fig. 1), der in Richtung des Pfeils von Fig. 2 auch wieder aus der Aussparung 20 entfernt werden kann. Wie die Fig. 1 bis 8 verdeutlichen, ergänzt der Einsatz 22 im eingesetzte Zustand sowohl das eine Wandteil 16 wie auch die Aussparung 20 komplementär. Zudem ist der Einsatz 22 von seiner Topographie und Kontur her so ausgebildet, dass er dem entsprechenden Bereich des anderen Wandteils 18 nahezu gleicht, so dass bei eingesetztem Einsatz 22 (vgl. Fig. 1) nicht unmittelbar erkennbar ist, dass die Einbaudose zweiteilig ausgebildet ist.

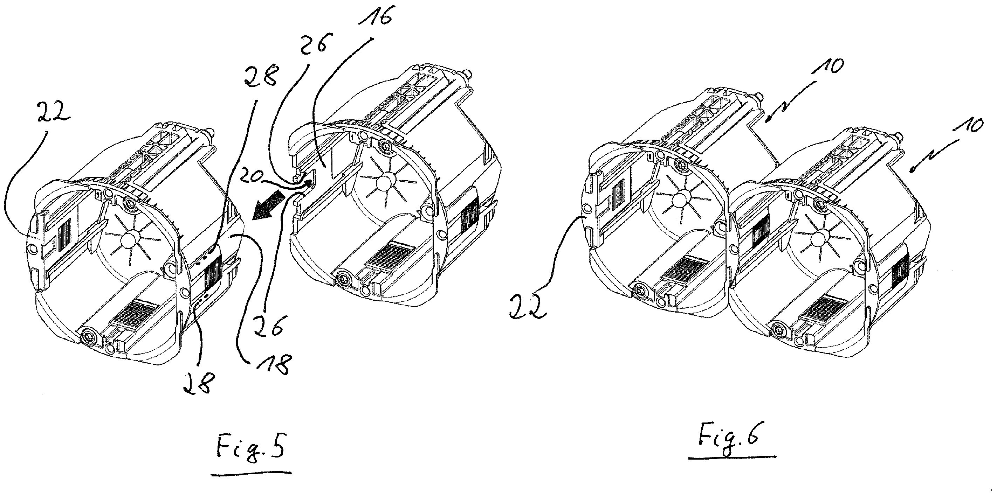

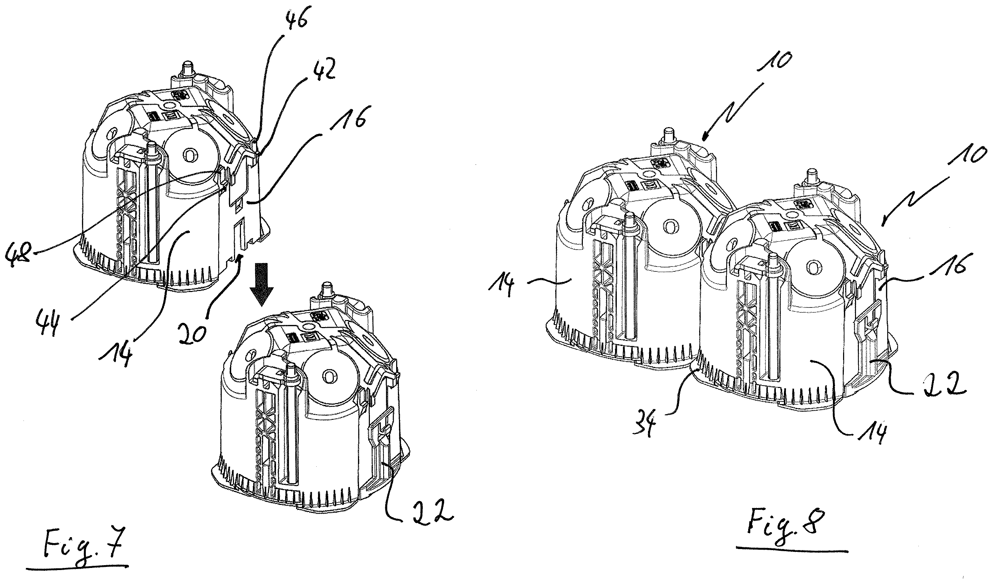

Um eine stabile Befestigung des Einsatzes 22 in der Einbaudose 10 zu gewährleisten, sind an dem einen Wandteil 16 und an dem Einsatz 22 zueinander komplementäre Führungselemente vorgesehen. So weist der Einsatz 22 annähernd U-förmige Führungsschienen 24 auf, in die Führungsabschnitte 26 des einen Wandteils 16 eingesetzt werden können. Auch sind an dem anderen Wandteil 18 Führungselemente 28 in Form von annähernd U-förmigen Schienen vorgesehen (vgl. Fig. 2), die zu den Führungselementen 26 des einen Wandteils 16 komplementär sind. Auf diese Weise ist es möglich, zwei gleichartige Einbaudosen 10 miteinander zu koppeln (vgl. Fig. 5 und Fig. 7), indem eine Einbaudose mit den Führungselementen 28 des anderen Wandteils 18 in die Führungselemente 26 des einen Wandteils 16 der anderen Einbaudose eingesetzt wird.

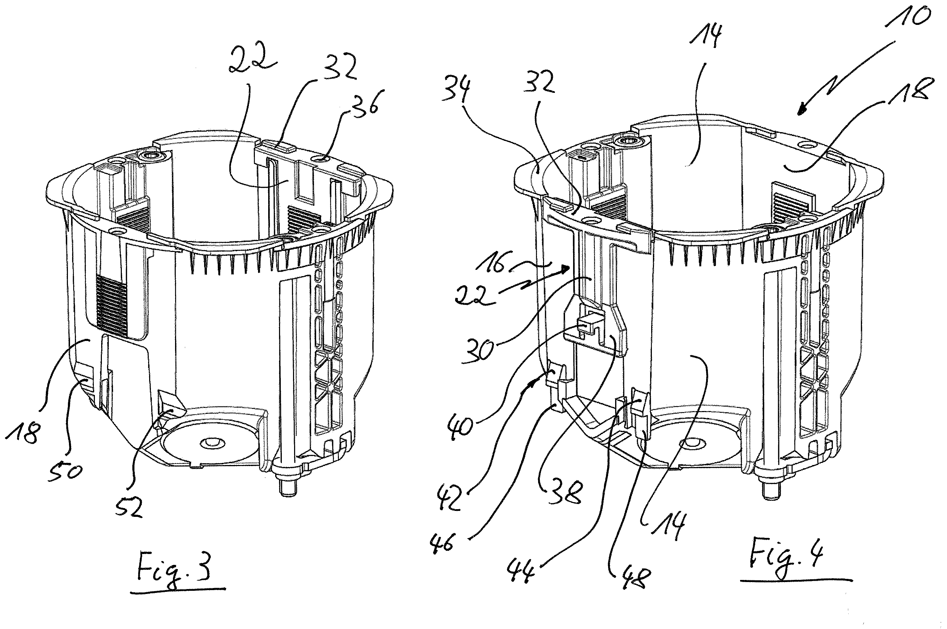

Wie insbesondere Fig. 2 und Fig. 4 verdeutlichen, besitzt der Einsatz 22 einen im Wesentlichen quaderförmigen Hauptkörper 30, an dessen vorderer Stirnseite ein sich quer zum Hauptkörper 30 erstreckender Quersteg 32 angeformt ist, der bei dem dargestellten Ausführungsbeispiel über den Hauptkörper 30 an zwei Seiten seitlich vorsteht. Hierdurch ist der Einsatz 22 annähernd T-förmig ausgebildet und der Quersteg 32 ist so geformt, dass er einen umlaufenden vorderen Rand 34 der Einbaudose 10 komplementär ergänzt. Weiterhin ist der Einsatz 22 mit einem Schraubenkanal 36 versehen, durch den von der Vorderseite aus eine Montageschraube eingeführt werden kann.

Auf der in Fig. 4 erkennbaren Außenseite des Einsatzes 22 ist an diesem ein Clip 38 angeformt, der mit einem Betätigungselement 40 in Form eines hintergreifbaren Vorsprungs versehen ist. Durch Hintergreifen des Vorsprungs 40 kann der Clip 38 etwas nach außen gezogen werden, so dass sich eine Verriegelung zwischen Einsatz 22 und Einbaudose 10 löst und der Einsatz 22 zur Vorderseite hin aus der Aussparung 20 herausgeschoben werden kann.

Sowohl die Einbaudose 10 wie auch der Einsatz 22 sind jeweils einstückig aus Kunststoff hergestellt. Weiterhin ist die Einbaudose 10 auf an sich bekannte Art und Weise mit durchbrechbaren Einführöffnungen sowie mit Kanälen für Befestigungsschrauben versehen.

Wenn zwei Einbaudosen der vorstehend beschriebenen Art nebeneinander angereiht werden sollen, muss zunächst aus einer Einbaudose der Einsatz 22 entfernt werden, so wie dies in Fig. 2 dargestellt ist. Hierzu wird der Vorsprung 40 (Fig. 4) hintergriffen, damit der Clip 38 aus seiner Raststellung gelöst und der Einsatz 22 zur Vorderseite hin aus der Aussparung 20 herausgeschoben werden kann. Anschließend kann eine weitere Einbaudose der gleichen Bauart, wie sie in Fig. 1 dargestellt ist, in die offene Aussparung 20 der einen Einbaudose eingeführt werden, so wie dies in Fig. 5 verdeutlicht ist. Hierzu wird die in Fig. 5 links dargestellte Einbaudose mit ihrem Wandteil 18 in die offene Aussparung 20 der in Fig. 5 rechten Einbaudose eingeführt, wobei die zueinander komplementären Führungselemente 28 und 26 miteinander zusammenwirken, um eine stabile Befestigung der beiden Einbaudosen nebeneinander zu gewährleisten. Anschließend sind die beiden Einbaudosen so wie in Fig. 6 dargestellt mit sehr geringem Abstand nebeneinander und an der Vorderseite bündig miteinander gekoppelt.

Um ein versehentliches Lösen miteinander gekoppelter Einbaudosen zu verhindern, sind an dem einen Wandteil 16 jeder Einbaudose und an dem anderen Wandteil 18 der anderen Einbaudose miteinander zusammenwirkende Rastmittel vorgesehen. So befinden sich an dem einen Wandteil 16 jeder Einbaudose zwei parallel beabstandete Rasthaken 42 und 44, an die jeweils ein Betätigungsfinger 46 und 48 angeformt ist (vgl. Fig. 4 und 7). Weiterhin sind an dem anderen Wandteil 18 jeder Einbaudose 10 zwei parallel beabstandete Rastaussparungen 50 und 52 vorgesehen (vgl. Fig. 3), in welche die Rasthaken 42 und 44 in zusammengesetztem Zustand eingreifen können. Durch Ausüben eines Drucks auf die Betätigungsfinger 46 und 48 lässt sich diese Rastverbindung wieder lösen, so dass zwei miteinander gekoppelte Einbaudosen wieder voneinander gelöst werden können.

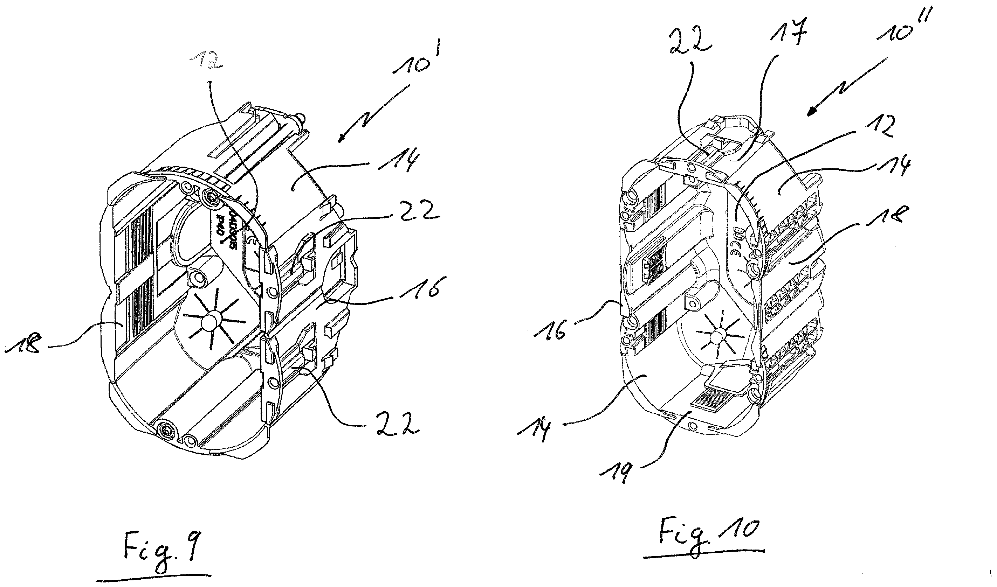

Fig. 9 zeigt eine weitere Ausführungsform einer Einbaudose 10', die so gestaltet ist, dass in dieser zwei Installationsgeräte nebeneinander Platz finden. Bei dieser Einbaudose 10' sind an dem in Fig. 9 rechts dargestellten abgeflachten Wandteil 16 zwei zur Vorderseite hin offene Aussparungen vorgesehen, in die von der Vorderseite aus jeweils ein das eine Wandteil 16 und die Aussparung komplementär ergänzender Einsatz 22 eingesetzt ist, der auf gleiche Weise wie bei der vorstehend beschriebenen Ausführungsform gestaltet ist. Es versteht sich, dass die Einbaudose 10' auch so ausgestaltet werden kann, dass drei oder mehr Installationsgeräte aufgenommen werden können.

Fig. 10 zeigt eine weitere Ausführungsform einer Einbaudose 10" für eine Aufnahme von zwei Installationsgeräten. Bei dieser Einbaudose 10" weist die gekrümmte Umfangswand 14 zwei weitere abgeflachte Wandteile 17 und 19 auf, die einander parallel gegenüberliegen, wobei nur in dem Wandteil 17 eine zur Vorderseite hin offene Aussparung vorgesehen ist, in die von der Vorderseite aus ein dieses Wandteil 17 und die Aussparung komplementär ergänzter Einsatz eingesetzt ist. Auch dieser Einsatz 22 ist wie bei den vorstehend beschriebenen Ausführungsformen ausgebildet. Auch können in dem abgeflachten Wandteil 16 oder 18 Aussparungen mit Einsätzen vorgesehen sein.

## Patentansprüche

1. Einbaudose (10, 10', 10") für elektrische Installationsgeräte, die eine offene Vorderseite, eine Rückwand (12) und eine gekrümmte Umfangswand (14) mit zwei abgeflachten Wandteilen (16, 18) aufweist, die einander parallel gegenüberliegen, wobei an nur einem (16) der beiden abgeflachten Wandteile (16, 18) eine zur Vorderseite hin offene Aussparung (20) vorgesehen ist, in die von der Vorderseite aus ein das eine Wandteil (16) und die Aussparung (20) komplementär ergänzender Einsatz (22) eingesetzt ist.

2. Einbaudose (10, 10', 10") nach Anspruch 1,
**dadurch gekennzeichnet,**
**dass** an dem einen Wandteil (16) und an dem Einsatz (22) zueinander komplementäre Führungselemente (26, 24) vorgesehen sind, und dass an dem anderen Wandteil (18) Führungselemente (28) vorgesehen sind, die zu den Führungselementen (26) des einen Wandteils (16) komplementär sind.

3. Einbaudose (10, 10', 10") nach Anspruch 1 oder 2,
**dadurch gekennzeichnet,**
**dass** der Einsatz (22) in der Aussparung (20) lösbar verriegelbar ist.

4. Einbaudose (10, 10', 10") nach Anspruch 3,
**dadurch gekennzeichnet,**
**dass** der Einsatz (22) einen mit einem Betätigungselement (40) versehenen Clip (38) aufweist.

5. Einbaudose (10, 10', 10") nach einem der vorstehenden Ansprüche,
**dadurch gekennzeichnet,**
**dass** der Einsatz (22) einen Schraubenkanal (36) enthält.

6. Einbaudose (10') nach einem der vorstehenden Ansprüche,
**dadurch gekennzeichnet,**
**dass** an nur einem (16) der beiden abgeflachten Wandteile (16, 18) mehrere zur Vorderseite hin offene Aussparungen (20) vorgesehen sind, in die von der Vorderseite aus jeweils ein das eine Wandteil (16) und die Aussparung (20) komplementär ergänzender Einsatz (22) eingesetzt ist.

7. Einbaudose (10, 10', 10") nach einem der vorstehenden Ansprüche,
**dadurch gekennzeichnet,**
**dass** der Einsatz (22) einen im Wesentlichen quaderförmigen Hauptkörper (30) aufweist, an dessen vorderer Stirnseite ein sich quer zum Hauptkörper (30) erstreckender Quersteg (32) angeformt ist, der insbesondere über den Hauptkörper (30) an zwei Seiten seitlich vorsteht.

8. Einbaudose (10") nach einem der vorstehenden Ansprüche,
**dadurch gekennzeichnet,**
**dass** die gekrümmte Umfangswand (14) zwei weitere abgeflachte Wandteile (17, 19) aufweist, die einander parallel gegenüberliegen, wobei in einem dieser Wandteile (17) eine zur Vorderseite hin offene Aussparung (20) vorgesehen ist, in die von der Vorderseite aus ein dieses Wandteil (17)und die Aussparung (20) komplementär ergänzender Einsatz (22) eingesetzt ist.

9. Kombination von zumindest zwei Einbaudosen (10, 10', 10") nach einem der vorstehenden Ansprüche,
**dadurch gekennzeichnet,**
**dass** an dem einen Wandteil (16) einer Einbaudose (10, 10', 10") und an dem anderen Wandteil (18) der anderen Einbaudose (10, 10', 10") miteinander zusammenwirkende Rastmittel (42, 44, 50, 52) vorgesehen sind.

10. Kombination nach Anspruch 9,
**dadurch gekennzeichnet,**
**dass** die Rastmittel (42, 44, 50, 52) manuell ohne Werkzeug lösbar sind.
